# EUROPEAN PATENT SPECIFICATION

(11) **EP 0 657 628 B1**
(45) Date of publication and mention of the grant of the patent: **10.06.1998**
(21) Application number: 94309219.7
(22) Date of filing: 09.12.1994
(51) Int. Cl.: F01L 1/04, F01L 1/16

(54) **Slide member**
Gleitstück
Pièce coulissante

(30) Priority: 10.12.1993 JP 310418/93
(43) Date of publication of application: 14.06.1995
(73) Proprietor: HONDA GIKEN KOGYO KABUSHIKI KAISHA, Minato-ku Tokyo 107 (JP)
(72) Inventor: Saka, Tsutomu, c/o K.K. HONDA GIJUTSU KENKYUSHO, Wako-shi, Saitama (JP); Fujiwara, Akira, c/o K.K. HONDA GIJUTSU KENKYUSHO, Wako-shi, Saitama (JP); Yamada, Noriyuki, c/o K.K. HONDA GIJUTSU KENKYUSHO, Wako-shi, Saitama (JP)
(74) Representative: Cockbain, Julian, Dr.

(56) References cited:
- FR-A- 2 245 773
- DATABASE WPI Week 9232, Derwent Publications Ltd., London, GB; AN 92-266687 & SU-A-1 687 641 (CHERMETMEKHANIZATSIYA FERR METAL MECHN) 30 October 1991
- PATENT ABSTRACTS OF JAPAN vol. 10, no. 131 (C-346) 15 May 1986 & JP-A-60 258 417 (HONDA GIKEN KOGYO KK) 20 December 1985
- DATABASE WPI Week 7710, Derwent Publications Ltd., London, GB; AN 77-16915Y & JP-A-50 090 521 (TOYOTA MOTOR KK) 19 July 1975
- PATENT ABSTRACTS OF JAPAN vol. 3, no. 152 (C-067) 9 October 1979 & JP-A-54 130 427 (TOYOTA MOTOR CORP) 9 October 1979
- DATABASE WPI Week 8340, Derwent Publications Ltd., London, GB; AN 83-780128 & JP-A-58 144 615 (TOYO KOGYO KK) 29 August 1983
- DATABASE WPI Week 7652, Derwent Publications Ltd., London, GB; AN 76-97598X & SU-A-508 556 (UKR CORRESPOND POLY) 11 June 1976

## Description

The present invention relates to a cast iron slide member, and particularly to a slide member for use under a high surface pressure.

A cast iron cam shaft for an internal combustion engine is a conventional example of such a slide member. The entire outer peripheral area on the camshaft can be a slide portion, or a half of the outer peripheral area, including a nose portion, can be the slide portion. In either case, the entire slide portion of this structure is chilled during production.

When such a cam shaft is used under a high surface pressure, pitting and scuffing resistance of the nose portion becomes a problem.

The pitting and scuffing resistance of such a sliding portion can be improved if the chilled structure of the nose portion has a uniform fine structure having a large amount of precipitated free cementite. However, such a structure has a high hardness and the hardness of the base structure is not reduced by strain relief annealing (conducted at a thermal treating temperature of 600°C after casting).

SU-A-1687641 discloses a slide member (rolling roll) having a slide portion comprising from 3 to 6 wt% C, Si, 0.2-1.5 wt% Mn, 0.5 to 1.5 wt% Cr, Ni, 0.0003 to 0.1 wt% of one or more chilling promoting elements and the balance substantially of iron.

The present invention provides a slide member, for example of the type described above, which has a slide portion, wherein the above described requirements can be satisfied by forming the cam shaft from a particular alloy composition.

Viewed from one aspect, the present invention provides a slide member having a slide portion (chilled in its preparation) which is formed from a cast iron composition comprising: 3.0% (inclusive) to 3.6% (inclusive) by weight of carbon (C), 1.6% (inclusive) to 2.4% (inclusive) by weight of silicon (Si), 0.2% (inclusive) to 1.5% (inclusive) by weight of manganese (Mn), 0.5 % (inclusive) to 1.0 % (inclusive) by weight of chromium (Cr), 1.5 % (inclusive) to 3.0 % (inclusive) by weight of nickel (Ni), 0.5 % (inclusive) to 1.0 % (inclusive) by weight of molybdenum (Mo), 0.0003 % (inclusive) to 0.1 % (inclusive) by weight of at least one chilling promoting element E_{L} selected from the group consisting of bismuth (Bi), tellurium (Te) and cerium (Ce), and the balance of iron (Fe) and unavoidable impurities.

If the composition of the slide member is maintained in the above specified manner, the chilled structure of the slide portion has a uniform fine structure having a large amount of precipitated cementite which has a high hardness. In addition, the base structure is converted to martensite and is micronized. Hence, the hardness of the base structure can be reduced by strain relief annealing process carried out at a thermal treating temperature of about 600° C. Thus, a slide member having excellent scuffing and pitting resistance can be produced.

The reasons why each of the chemical constituents is added and the reasons why the content of each chemical constituent is specified, are as follows.

Carbon (C) is used to enhance the castability of the slide member, to form a chilled structure in the slide portion and to improve the quality of the chilled structure. However, if the C content is less than 3.0 % by weight, the flowability of the molten metal alloy is reduced. On the other hand, if the C content is larger than 3.6 % by weight, there is a risk of graphite being precipitated, resulting in a degraded quality of the chilled structure.

Silicon (Si) is used to improve the quality of the chilled structure. However, if the Si content is less than 1.5 % by weight, the depth of the chilled structure is increased, resulting in a slide member having a reduced deflection force. On the other hand, if the Si content is larger than 2.4 % by weight, the depth of the chilled structure is reduced, because silicon is a graphitization promoting element.

Manganese (Mn) is used to ensure that the chilled structure has a sufficient depth to uniformly micronize the chilled structure and the base structure, and also to prevent precipitation of graphite. However, if the Mn content is less than 0.2 % by weight, the molten metal does not have a super-cooling capacity and, as a result, the depth of the chilled structure is reduced and the chilled structure and the base structure cannot be uniformly micronized. On the other hand, if the Mn content is larger than 1.5 % by weight, the flowability of the molten metal is reduced.

Chromium (Cr) is used to increase the amount of free cementite precipitated in the structure, to improve the quality of the chilled structure, and to strengthen the base structure. However, if the Cr content is less than 0.5 % by weight, the amount of precipitated free cementite is reduced to an extent that it fails to strengthen the base structure. On the other hand, if the Cr content is larger than 1.5 % by weight, the chilling is attained over the entire outer peripheral area, resulting in a reduced deflection force and a degraded machinability, because chromium has the effect of promoting chilling.

Nickel (Ni) is used to encourage conversion to martensite and to strengthen the base structure. However, if the Ni content is less than 1.0 % by weight, the base structure cannot become martensite. On the other hand, if the Ni content is larger than 3.0 % by weight, the workability of the slide member is degraded and, for example, cracks may be produced in the slide member during working thereof.

Molybdenum (Mo) is used to increase the strength of free cementite, to improve the quality of the chilled structure and to strengthen the base structure. However, if the Mo content is smaller than 0.5 % by weight, the free cementite and the base structure cannot be sufficiently strengthened. On the other hand, if the Mo content is larger than 1.0 % by weight, the chilling is attained over the entire outer peripheral area, resulting in a reduced deflection force and a degraded machinability, because molybdenum, like chromium has an effect of promoting chilling.

Bismuth, tellurium and cerium are chilling promoting elements E_{L}. They are used to contribute to the formation of a chilled structure, to uniformly micronise the chilled structure and to inhibit the precipitation of graphite. At least one chill-promoting element E_{L} selected from these elements is added. If two or more the chilling promoting elements E_{L} are added, the total amount thereof is in a range of 0.0003 % (inclusive) to 0.1 % (inclusive) by weight. If the E_{L} content is less than 0.0003 % by weight, the effect of addition of the chilling promoting element E_{L} is lost. On the other hand, if the content of E_{L} is larger than 0.1 % by weight, chilling is attained over the entire outer peripheral area, and the hardness particularly of the inside portion of the slide member is excessively increased. As a result, it becomes difficult or even impossible to drill the slide member. Preferably, the content of the chilling promoting element E_{L} is smaller than 0.001 % by weight. If the E_{L} content is equal to or larger than 0.001 % by weight, the entire outer peripheral area of the slide member tends to be chilled.

Preferred embodiments of the invention will now be described by way of example and with reference to the accompanying drawings in which:
Fig. 1 is a perspective view of a portion of a cam shaft;
Fig. 2 is a sectional view taken along a line 2-2 in Fig. 1; looking in the direction of the arrows; and
Fig. 3 is a sectional view of a corresponding portion of a casting mold.

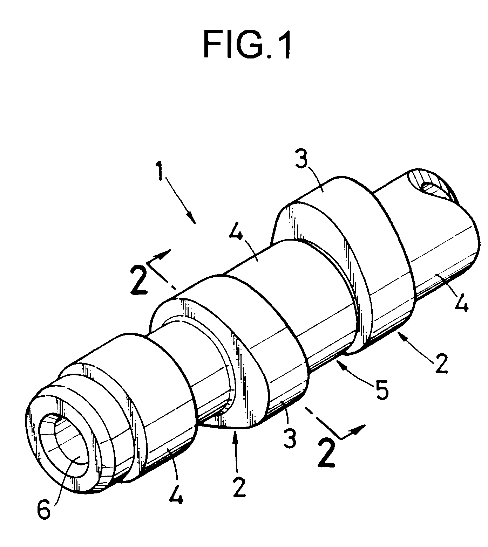

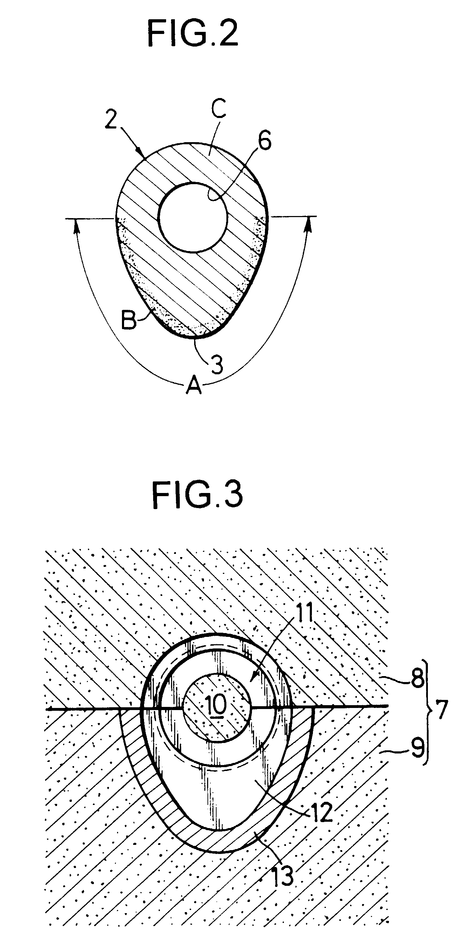

Figs. 1 and 2 show a cam shaft 1 made of cast iron for use in an internal combustion engine as a slide member. The cam shaft 1 has a partial outer peripheral area A, including nose portions 3 of cams 2, which constitute its slide portions. The partial outer peripheral area A has been chilled and therefore each of the cams 2 has a chilled structure B. Most of the area C of each of the cams 2, excluding the outer semi-peripheral areas A and a shaft portion 5 including a journal portion 4, are not chilled. In Figs. 1 and 2, reference character 6 is an oil hole.

The cam shaft 1 in this embodiment is formed from cast iron which contains 3.0 % (inclusive) to 3.6 % (inclusive) by weight of carbon (C), 1.6 % (inclusive) to 2.4 % (inclusive) by weight of silicon (Si), 0.2 % (inclusive) to 1.5 % (inclusive) by weight of manganese (Mn), 0.5 % (inclusive) to 1.5 % (inclusive) by weight of chromium (Cr), 1.0 % (inclusive) to 3.0 % (inclusive) by weight of nickel (Ni), 0.5 % (inclusive) to 1.0 % (inclusive) by weight of molybdenum (Mo), 0.0003 % (inclusive) to 0.1 % (inclusive) by weight of at least one chilling promoting element E_{L} selected from the group consisting of bismuth (Bi), tellurium (Te) and cerium (Ce), and the balance of iron (Fe) and unavoidable impurities.

Such a cam shaft 1 is cast using a casting mold 7 shown in Fig. 3. The casting mold 7 includes an upper die 8, a lower die 9, and an oil hole shaping core 10 which is clamped between the upper and lower dies 8 and 9 by closing the upper and lower dies 8 and 9. A cam shaft molding cavity 11 is defined around the core. A portion of the lower die 9 for molding the partial outer peripheral area A, including the nose portions 3 in a cam molding area 12 of the cavity 11, is formed from a Fe-based or Cu-based chiller 13.

A molten metal having a suitable cast iron composition is prepared and poured into the cavity 11, whereby a cam shaft 1 is cast. At the same time, the partial outer peripheral area A of the cam 2 is quenched and chilled by the chiller 13 to form a chilled structure B. After casting, the cam shaft 1 is subjected to a strain relief annealing treatment at a thermal treating temperature of about 600°C.

Table 1 shows the composition, the hardness of the nose portion 3, the structure of the nose portion 3, and the hardness of the shaft portion 5 of cam shafts 1 produced using bismuth (Bi) as the chilling promoting element E_{L} in Examples 1 to 3. In the column of Chemical Constituents in Table 1, the balance consists of Fe and unavoidable impurities. The same is true in subsequent Tables. The term "chilled", in the column reporting the structure of the nose portion 3, means a uniform fine chilled structure. The same is true in the subsequent Tables.

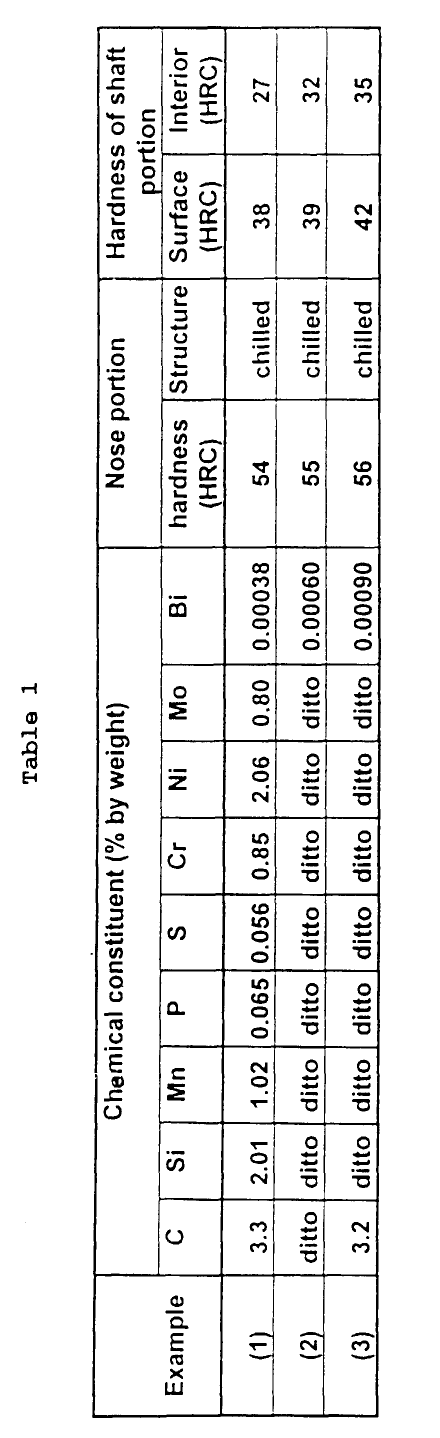

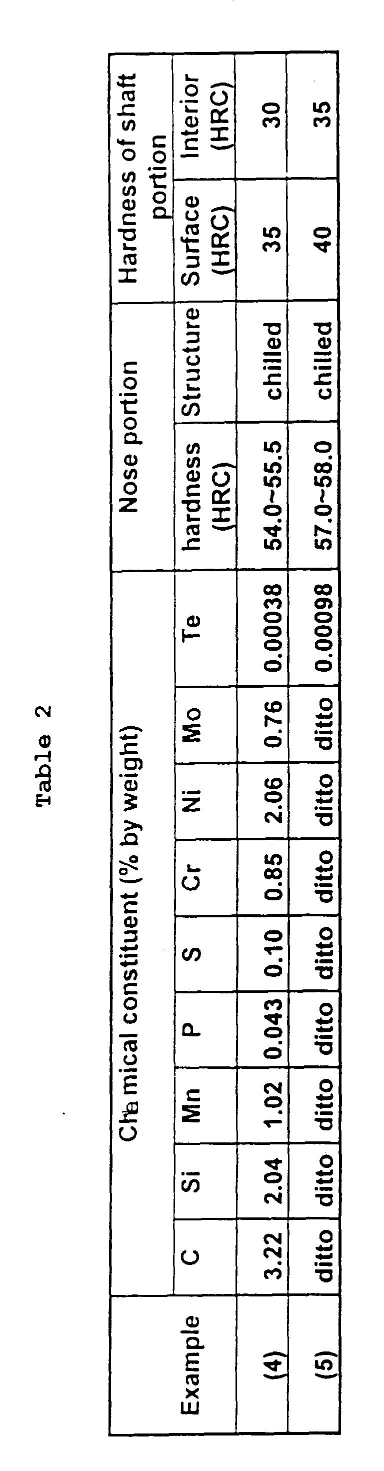

Table 3 shows the composition, the hardness of the nose portion 3, the structure of the nose portion 3 and the hardness of the shaft portion 5 of cam shafts 1 produced using cerium (Ce), as the chilling promoting element E_{L} in examples 6 and 7.

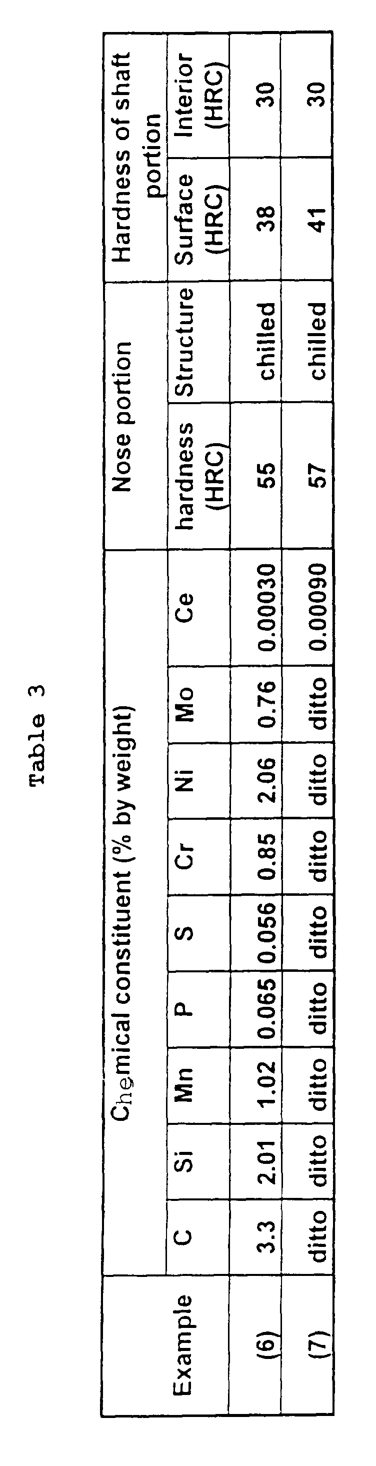

Table 4 shows the composition, the hardness of the nose portion 3, the structure of the nose portion 3 and the hardness of the shaft portion 5 of cam shafts 1 produced using two elements: tellurium (Te) and cerium (Ce), as the chilling promoting elements E_{L} in Examples 8 and 9.

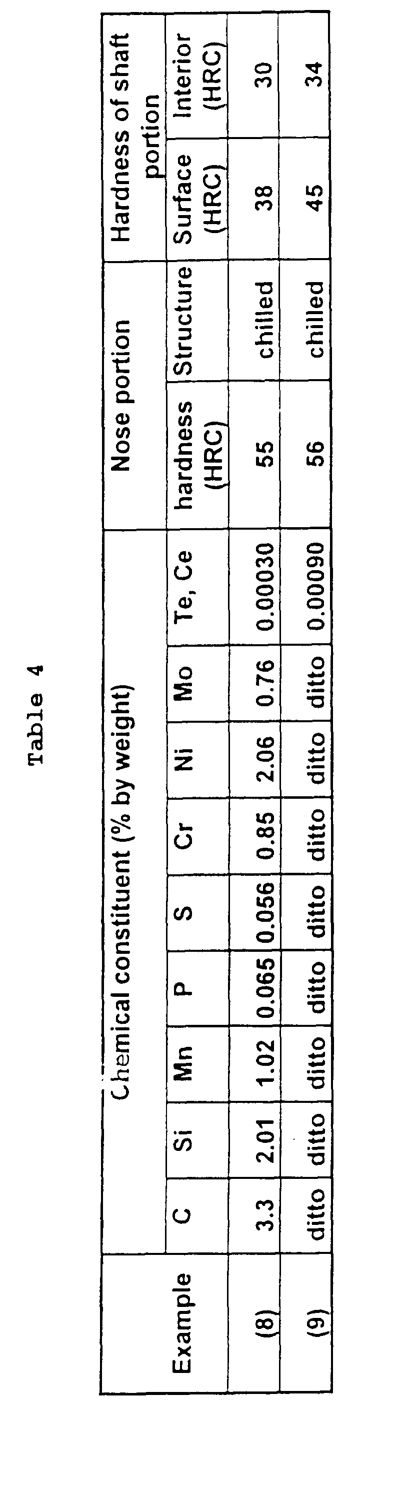

Table 5 shows the composition, the hardness of the nose portion 3, the structure of the nose portion 3 and the hardness of the shaft portion 5 of cam shafts 1 produced using three elements: bismuth (Bi), tellurium (Te) and cerium (Ce) as the chilling promoting elements E_{L} in Examples 10 and 11.

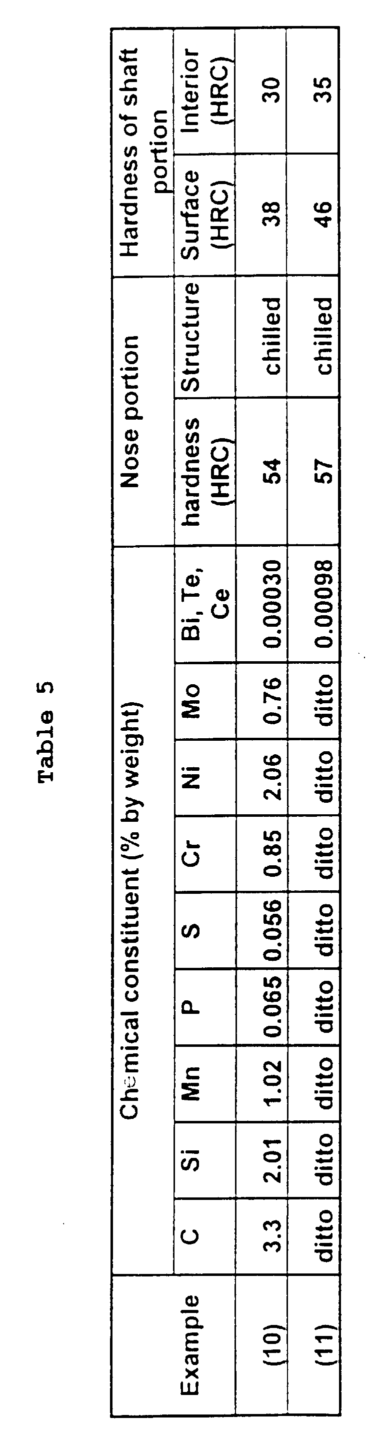

Table 6 shows the composition, the hardness of the nose portion 3, the structure of the nose portion 3 and the hardness of the shaft portion 4 of cam shafts 1 produced using tellurium (Te) as the chilling promoting element E_{L} for comparative Examples 1 to 5.

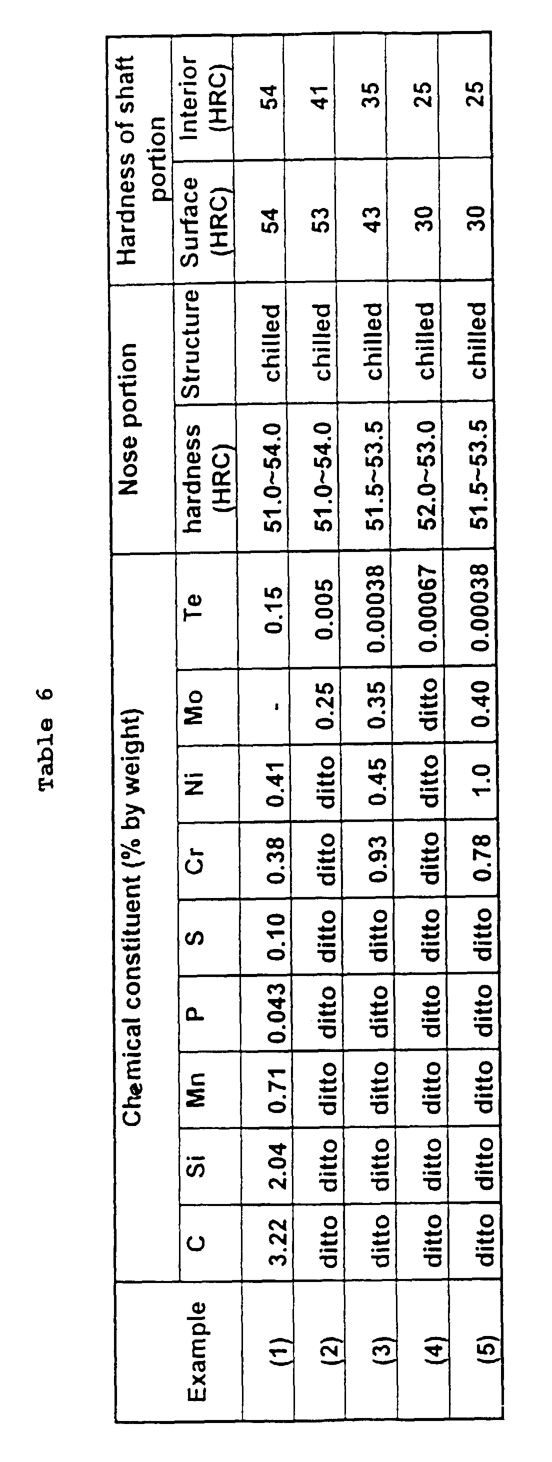

As shown in Tables 1 to 5, in Examples 1 to 11 of the cam shafts 1, wherein the content of each of the chemical constituents is controlled to be within the above-described ranges, the hardness HRC of each nose portion 3 is equal to or greater than 54, and the structure of the nose portion 3 is a uniform fine chilled structure B. Moreover, the hardness HRC of the shaft portion 5 is maintained at a low level, as compared with the hardness of the nose portion 3.

As shown in Table 6, the chilled structure of the cam shafts made according to comparative Examples 1 to 5 is micronized as a result of the tellurium content, but in comparative Examples 1 and 2, the base structure is not strengthened, because the Cr, Ni and Mo contents depart from the above-described ranges. Therefore, the hardness HRC of the nose portion of the cams is non-uniform. Further, the entire outer peripheral area of the cam shaft 1 tends to be chilled, because the Te content is relatively large.

Because the Ni and Mo contents in comparative Examples 3 and 4 depart from the above-described ranges, and the Mo content in comparative Example 5 departs from the above-described range, the base structure is not strengthened and therefore the hardness HRC of the nose portion is not uniform and is reduced.

The cam shaft 1 of Example 5 was incorporated into a valve operating system in an engine to examine the sliding characteristics of the cam 2. The valve operating system used was a slipper type valve operating system having a cam slide portion of a rocker arm formed by a slipper surface forming piece, and a roller type valve operating system having a roller used in place of the slipper surface forming piece.

The slipping forming piece was formed from cast iron consisting of 2.4 % by weight of carbon (C), 0.8 % by weight of silicon (Si), 0.5 % by weight of phosphorus (P), 0.3 % by weight of manganese (Mn), 13 % by weight of chromium, (Cr), 2.8 % by weight of molybdenum (Mo), 0.13 % by weight of tungsten (W), 0.13 % by weight of vanadium (V), 1.4 % by weight of nickel (Ni) and the balance of iron (Fe). The roller was formed from high-carbon chromium bearing steel (JIS SUJ2). The outer peripheral surface of each of the cams 2 was subjected to the same, known surface treatment, e.g., a steam treatment to improve its conformability to the rocker arm.

In the slipper type valve operating system, scuffing of each cam 2 is a problem. Therefore, the scuffing resistance of the nose portion 3 was examined by setting the number of revolutions of the engine at 4,300 rpm and varying the surface pressure of the cam 2 applied to the nose portion 3. The result showed that scuffing occurred in the nose portion 3 even under a very light surface pressure of 100 kgf/mm².

On the other hand, in the roller type valve operating system, pitting of each cam 2 is a problem. Therefore, the pitting resistance of the nose portion 3 was examined by setting the number of revolutions of the engine at 2,000 rpm and varying the surface pressure of the cam 2 applied to the nose portion 3. The result showed that pitting occurred in the nose portion 3 even under a low surface pressure of 180 kgf/mm².

By contrast, the cam shaft 1 of Example 5 according to the invention exhibits excellent sliding characteristics even under a high surface pressure.

Although the present invention has been described as being applied to the cam shaft, it will be understood that the present invention is not limited to a cam shaft and is, of course, applicable to other slide members.

## Claims

1. A slide member having a slide surface portion comprising from 3.0% to 3.6% by weight of carbon, from 0.2% to 1.5% by weight of manganese, from 0.5% to 1.5% by weight of chromium, from 0.0003% to 0.1% by weight of one or more chilling promoting elements characterised in that the slide surface portion further comprises 1.0% to 3.0% by weight of nickel, from 0.5% to 1.0% by weight of molybdenum and from 1.6% to 2.4% by weight of silicon, the balance substantially of iron.

2. A slide member as claimed in claim 1, where said chilling promoting elements are selected from bismuth, tellurium and cerium.

3. A slide member as claimed in claim 1 or claim 2, wherein said chilling promoting elements are present in an amount of less than 0.001% by weight.

4. A slide member as claimed in any one of claims 1 to 3 further comprising from 0.01 to 0.1% by weight of phosphorus and from 0.01 to 0.1% by weight of sulphur.

5. A process for preparing a slide member as claimed in claim 1, said process comprising
(a) casting a molten metal having a composition comprising from 3.0% to 3.6% by weight of carbon,from 0.2% to 1.5% by weight of manganese, from 0.5% to 1.5% by weight of chromium, from 0.0003% to 0.1% by weight of one or more chilling promoting elements, 1.0% to 3.0% by weight of nickel, from 0.5% to 1.0% by weight of molybdenum, from 1.6% to 2.4% by weight of silicon and the balance substantially of iron to form a slide member;
(b) simultaneously quenching and chilling the outer peripheral area of the slide member to form a chilled structure; and
(c) subjecting the resulting slide member to a strain relief annealing treatment at a temperature of about 600°C.

6. A slide member as claimed in any one of claims 1 to 4 wherein said slide surface portion has a chilled structure.

7. A slide member as claimed in claim 6 being a cam shaft for an internal combustion engine having a cam disposed thereon, a nose portion of said cam being formed as said chilled structure.

## Patentansprüche

1. Gleitelement mit einem Gleitflächenabschnitt, umfassend von 3,0 Gew.-% bis 3,6 Gew.-% Kohlenstoff, von 0,2 Gew.-% bis 1,5 Gew.-% Mangan, von 0,5 Gew.-% bis 1,5 Gew.-% Chrom, von 0,0003 Gew.-% bis 0,1 Gew.-% von einem oder mehreren härtungsfördernden Elementen, **dadurch gekennzeichnet**, daß der Gleitflächenabschnitt ferner 1,0 Gew.-% bis 3,0 Gew.-% Nickel, von 0,5 Gew.-% bis 1,0 Gew.-% Molybdän und von 1,6 Gew.-% bis 2,4 Gew.-% Silicium aufweist, wobei der Rest im wesentlichen aus Eisen ist.

2. Gleitelement nach Anspruch 1, wobei die härtungsfördernden Elemente aus Wismuth, Tellur und Cer gewählt sind.

3. Gleitelement nach Anspruch 1 oder Anspruch 2, wobei die härtungsfördernden Elemente in einer Menge von weniger als 0,001 Gew.-% vorhanden sind.

4. Gleitelement nach einem der Ansprüche 1 bis 3, ferner umfassend von 0,01 bis 0,1 Gew.-% Phosphor und von 0,01 bis 0,1 Gew.-% Schwefel.

5. Verfahren zur Herstellung eines Gleitelements nach Anspruch 1, wobei das Verfahren umfaßt:
(a) Gießen von geschmolzenem Metall mit einer Zusammensetzung, umfassend von 3,0 Gew.-% bis 3,6 Gew.-% Kohlenstoff, von 0,2 Gew.-% bis 1,5 Gew.-% Mangan, von 0,5 Gew.-% bis 1,5 Gew.-% Chrom, von 0,0003 Gew.-% bis 0,1 Gew.-% von einem oder mehreren härtungsfördernden Elementen, 1,0 Gew.-% bis 3,0 Gew.-% Nickel, von 0,5 Gew.-% bis 1,0 Gew.-% Molybdän, von 1,6 Gew.-% bis 2,4 Gew.-% Silicium sowie den Rest von im wesentlichen aus Eisen, zur Bildung eines Gleitelements;
(b) gleichzeitiges Abschrecken und Härten der Außenumfangsfläche des Gleitelements zur Bildung einer gehärteten Struktur; und
(c) Unterziehen des sich ergebenden Gleitelements einer spannungsmindernden Glühbehandlung bei einer Temperatur von etwa 600°C.

6. Gleitelement nach einem der Ansprüche 1 bis 4, bei dem der Gleitflächenabschnitt eine gehärtete Struktur aufweist.

7. Gleitelement nach Anspruch 6, welches eine Nockenwelle für eine Brennkraftmaschine mit daran angeordneten Nocken ist, wobei ein Nasenabschnitt des Nockens als die gehärtete Struktur ausgebildet ist.

## Revendications

1. Pièce coulissante ayant une portion de surface coulissante comprenant de 3,0% à 3,6% en poids de carbone, de 0,2% à 1,5% en poids de manganèse, de 0,5% à 1,5% en poids de chrome, de 0,0003% à 0,1% en poids d'un ou plusieurs éléments favorisant le refroidissement brusque caractérisée en ce que la portion de surface coulissante comprend en outre 1,0% à 3,0% en poids de nickel, de 0,5% à 1,0% en poids de molybdène et de 1,6% à 2,4% en poids de silicium, le reste essentiellement de fer.

2. Pièce coulissante telle que revendiquée dans la revendication 1, où lesdits éléments favorisant le refroidissement brusque sont choisis parmi le bismuth, le tellure et le cérium.

3. Pièce coulissante telle que revendiquée dans la revendication 1 ou la revendication 2, dans laquelle lesdits éléments favorisant le refroidissement brusque sont présents en une quantité de moins de 0,001% en poids.

4. Pièce coulissante telle que revendiquée dans l'une quelconque des revendications 1 à 3, comprenant en outre de 0,01 à 0,1% en poids de phosphore et de 0,01 à 0,1% en poids de soufre.

5. Procédé de préparation d'une pièce coulissante telle que revendiquée dans la revendication 1, ledit procédé comprenant :
(a) le coulage d'un métal fondu ayant une composition comprenant de 3,0% à 3,6% en poids de carbone, de 0,2% à 1,5% en poids de manganèse, de 0,5% à 1,5% en poids de chrome, de 0,0003% à 0,1% en poids d'un ou de plusieurs éléments favorisant le refroidissement brusque, de 1,0% à 3,0% en poids de nickel, de 0,5% à 1,0% en poids de molybdène, de 1,6% à 2,4% en poids de silicium et le reste essentiellement de fer, pour former une pièce coulissante;
(b) simultanément, la trempe et le refroidissement brusque de la surface périphérique extérieure de la pièce coulissante pour former une structure trempée à froid ; et
(c) la soumission de la pièce coulissante obtenue à un traitement de recuit réducteur des contraintes, à une température d'environ 600°C.

6. Pièce coulissante telle que revendiquée dans l'une quelconque des revendications 1 à 4, dans laquelle ladite portion de surface coulissante a une structure trempée à froid.

7. Pièce coulissante telle que revendiquée dans la revendication 6, qui est un arbre à cames pour un moteur à combustion interne sur lequel est disposée une came, une portion de nez de ladite came étant formée en tant que ladite structure trempée à froid.
